(19) **Europäisches Patentamt / European Patent Office / Office européen des brevets**

(11) **EP 1 151 963 B1**

(12) **FASCICULE DE BREVET EUROPEEN**

(45) Date de publication et mention de la délivrance du brevet:
**22.06.2011 Bulletin 2011/25**

(51) Int Cl.:
***C01B 39/48*** *(2006.01)*

(21) Numéro de dépôt: **01401027.6**

(22) Date de dépôt: **23.04.2001**

(54) **Zeolithe de type structural EUO de faible rapport SI/AL et son utilisation en tant que catalyseur d'isomérisation des coupes C8 aromatiques**

Zeolith des EUO-Typs mit niedrigem SI/ALVerhältnis und seine Verwendung als Katalysator für die Isomerizierung von C8 Schnitten

EUO-type zeolite with reduced SI/AL ratio and its use as a catalyst for the isomerization of C8 fractions

(84) Etats contractants désignés:
**DE ES GB IT NL**

(30) Priorité: **05.05.2000 FR 0005797**

(43) Date de publication de la demande:
**07.11.2001 Bulletin 2001/45**

(73) Titulaire: **Institut Français du Pétrole**
**92852 Rueil-Malmaison Cedex (FR)**

(72) Inventeurs:
• **Rouleau, Loic**
**69390 Charly (FR)**
• **Kolenda, Frédéric**
**69630 Chaponost (FR)**
• **Merlen, Elisabeth**
**92500 Rueil-Malmaison (FR)**
• **Alario, Fabio**
**92200 Neuilly-sur-Seine (FR)**

(56) Documents cités:
**EP-A- 0 159 845     US-A- 4 537 754**
**US-A- 4 695 667**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**Domaine technique**

La présente invention concerne une nouvelle zéolithe de type structural EUO présentant une composition chimique de sa charpente cristalline et une proportion d'azote spécifiques. L'invention concerne également l'utilisation de la zéolithe comme catalyseur dans les principaux procédés de transformation d'hydrocarbures qu'utilise le raffinage du pétrole et la pétrochimie. Elle est en particulier dans les procédés d'isomérisation des composés aromatiques à 8 atomes de carbone encore appelés « coupes C8 aromatiques ».

**Art antérieur**

L'isomérisation en xylènes de l'éthylbenzène ou d'un mélange de xylènes et d'éthylbenzène nécessite la présence d'une fonction acide et d'un métal du groupe VIII. Le but principal de l'isomérisation des coupes C8 aromatiques est de produire du paraxylène qui est l'isomère le plus recherché en raison de son application notamment dans l'industrie du textile. La réaction d'isomérisation des C8 aromatiques conduit à des réactions parasites résultant de l'ouverture de cycles naphténiques suivie ou non de craquage ou encore de réactions de dismutation et/ou de transalkylation des aromatiques en C8 générant des composés aromatiques non désirés.

Il a déjà été décrit des catalyseurs pour l'isomérisation des composés aromatiques à 8 atomes de carbone. Les brevets US-A-4,723,051 et US-A-4,665,258 décrivent par exemple des formulations optimisées à base de zéolithes mordénites et d'un métal du groupe VIII mais elles conduisent à des catalyseurs avec lesquels les réactions parasites restent non négligeables. Ces catalyseurs manquent de sélectivité en paraxylène au profit des réactions parasites précitées qui constituent des pertes nettes pour la réaction d'isomérisation recherchée.

D'autres travaux ont montré que les zéolithes de type structural EUO présentent des performances catalytiques améliorées, notamment en terme d'activité, lorsque lesdites zéolithes sont utilisées comme catalyseur dans les réactions d'isomérisation_des coupes C8 aromatiques. En particulier, la demande de brevet européenne EP-A-0 923 987 de la demanderesse concerne des catalyseurs préparés avec une zéolithe de type structural EUO présentant une bonne dispersion et une bonne résistance mécanique du métal du groupe VIII et qui donnent de bonnes sélectivités.

Les zéolithes de type structural EUO sont décrites dans l'art antérieur (W.M. Meier et D.H. Oison, «Atlas of Zeolites Structure Types», 4ème Edition, 1996) et présente un réseau microporeux monodimensionnel, dont le diamètre des pores est de $4,1 \times 5,7$ Å (1 Å = 1 Angstrom = $1.10^{-10}$ m). N.A. Briscoe *et al* ont enseigné que ces canaux monodimensionnels possèdent des poches latérales de profondeur 8,1 Å et de diamètre $6,8 \times 5,8$ Å (Zeolites, 8, 74, 1988)

Les zéolithes de type structural EUO comprennent la zéolithe EU-1, la zéolithe TPZ-3 et la zéolithe ZSM-50 et ont généralement la formule suivante sous forme anhydre : $0\text{-}100\ XO_2 : 0\text{-}10\ T_2O_3 : 0\text{-}20\ R_{2/n}O$ : où R représente un cation de valence n, X représente le silicium et/ou le germanium, T représente au moins un élément choisi parmi l'aluminium, le fer, le gallium, le bore, le titane, le vanadium, le zirconium, le molybdène, l'arsenic, l'antimoine, le chrome et le manganèse.

De manière générale, les méthodes de préparation de zéolithes de type structural EUO comprennent le mélange en milieu aqueux d'une source d'un élément X, d'une source d'un élément T, d'une source d'un métal alcalin et d'un composé organique azoté jouant le rôle de structurant.

La zéolithe EU-1, décrite dans la demande de brevet européenne EP-A-0 042 226, est préparée en utilisant comme structurant soit le dérivé alkylé d'une polyméthylène α-ω diammonium, soit un produit de dégradation dudit dérivé soit encore des précurseurs dudit dérivé, le structurant se trouvant après synthèse dans la porosité intracristalline de ladite zéolithe (A. Moini et al, Zeolites, 14, 1994). Cette zéolithe EU-1 présente préférentiellement un rapport X/T compris entre 5 et 75.

La zéolithe TPZ-3, décrite dans la demande de brevet européenne EP-A-0 051 318, est préparée en utilisant la même famille de structurant que celle employée pour synthétiser la zéolithe EU-1. Il est notamment décrit l'utilisation du composé 1,6-N,N,N,N',N',N'-hexaméthylhexaméthylénediammonium. Cette zéolithe TPZ-3 présente préférentiellement un rapport X/T compris entre 10 et 125.

Les procédés de synthèse utilisant un dérivé alkylé d'un polyméthylène α-ω diammonium comme composé organique azoté conduisent à l'obtention de zéolithes, après synthèse, présentant généralement un rapport N/Si supérieur à 0,07.

La zéolithe ZSM-50, décrite dans les documents EP 0 159 845 et US-A-4,640,829, est préparée en utilisant comme structurant le dérivé dibenzyldiméthylammonium (DBDMA), lequel est contenu dans la porosité intracristalline de ladite zéolithe (A. Thangaraj et al, Zeolites, 11, 1991). Cette zéolithe présente un rapport X/T supérieur à 50.

Les zéolithes de type structural EUO diffèrent essentiellement par la nature du structurant organique azoté présent dans le solide, après la synthèse, et donc par leur rapport N/T respectif.

Ainsi, une zéolithe EUO obtenue avec le dérivé DBDMA se distingue essentiellement, après la synthèse, des zéolithes EUO synthétisée avec les composés de polyméthylène $\alpha$-$\omega$ diammonium, par la nature du cation présent dans la porosité intracristalline. Il est de plus connu dans la littérature que la structure d'une zéolithe EUO, obtenue avec le DBDMA, diffère de celle d'une zéolithe EUO obtenue avec les composés de polyméthylène $\alpha$-$\omega$ diammonium par la disposition des atomes d'aluminium au sein du réseau cristallin (W. Souverijns et al, Microporous Materials, 4, 123-130, 1995).

Alors que la famille des structurants utilisés pour synthétiser les zéolithes EU-1 et TPZ-3 semble favoriser l'obtention de zéolithes à faible rapport Si/Al, des structurants tels que le DBDMA favorisent l'obtention de zéolithes à haut rapport Si/Al. Ainsi, le brevet US-A-4,640,829 décrit une méthode de préparation d'une zéolithe ayant un rapport Si/Al supérieur à 125 et enseigne que le DBDMA est particulièrement efficace pour favoriser la nucléation et la croissance de cristaux de zéolithes ZSM-50 ayant un rapport Si/Al élevé. Il est de plus rapporté qu'à un rapport Si/Al inférieur à 125, le produit obtenu ne contient pas majoritairement la zéolithe ZSM-50. De même, Rao et al, (Zeolites, 9, 483-490, 1989) ont décrit la synthèse d'une zéolithe de type structural EUO à l'aide d'un mélange de benzyldiméthylamine et de chlorure de benzyle, précurseurs du chlorure de dibenzyldiméthylammonium, la zéolithe obtenue présentant un taux de cristallinité d'autant meilleur que le rapport Si/Al est élevé. Rao enseigne, par ailleurs, que pour de nombreuses applications catalytiques, il est préférable d'utiliser des zéolithes ayant un rapport Si/Al élevé.

## Résumé de l'invention

La présente invention est basée sur la découverte d'une nouvelle zéolithe de type structural EUO comprenant au moins un élément X choisi parmi le silicium et le germanium et au moins un élément T choisi parmi l'aluminium, le fer, le gallium, le bore, le titane, le vanadium, le zirconium, le molybdène, l'arsenic, l'antimoine, le chrome et le manganèse. La zéolithe de l'invention est caractérisée en ce qu'elle présente un rapport X/T compris entre 5 et 50, de préférence compris entre 6 et 35, de manière plus préférée compris entre 7 et 30, et de manière encore plus préférée compris entre 7 et 26 et en ce qu'elle présente un rapport N/X compris entre 0,010 et 0,065. La zéolithe selon l'invention est une nouvelle zéolithe de type structural EUO. Elle se différencie des zéolithes EU-1 et TPZ-3 en ce qu'elle présente après synthèse un rapport N/X plus faible et elle se différencie de la zéolithe ZSM-50 par son faible rapport X/T. L'invention concerne également l'utilisation de ladite zéolithe comme élément d'un catalyseur mis en oeuvre dans les procédés de transformation d'hydrocarbures et notamment dans les procédés d'isomérisation des C8 aromatiques.

## Intérêt de l'invention

La zéolithe de type structural EUO selon l'invention, présentant de faibles rapports X/T et N/X, et utilisée ultérieurement comme catalyseur, en association avec au moins un liant, au moins un métal choisi parmi les éléments du groupe VIII, ledit métal étant déposé de préférence sur le liant, présente des performances catalytiques améliorées en transformation d'hydrocarbures en terme d'activité, comme par exemple en isomérisation des coupes C8 aromatiques, c'est-à-dire de mélanges constitués de xylènes et éventuellement d'éthylbenzène. En particulier, il a été découvert, de manière surprenante, qu'une zéolithe de type structural EUO présentant un rapport N/X inférieur à 0,065 et un rapport X/T inférieur à 50, conduit à un catalyseur plus actif et plus sélectif que ceux à base de zéolithes EUO présentant un rapport N/X inférieur à 0,065 et un rapport Si/Al supérieur à 50, une meilleure activité et une meilleure sélectivité permettant d'augmenter très sensiblement les rendements en aromatiques recherchés. Un catalyseur à base de la zéolithe EUO selon l'invention permet, de plus, de limiter les pertes nettes constituées par les produits secondaires formés lors des réactions parasites.

## Description de l'invention

La présente invention concerne une zéolithe de type structural EUO comprenant au moins un élément X choisi parmi le silicium et le germanium et au moins un élément T choisi parmi l'aluminium, le fer, le gallium, le bore, le titane, le vanadium, le zirconium, le molybdène, l'arsenic, l'antimoine, le chrome et le manganèse, ladite zéolithe étant caractérisée en ce qu'elle présente un rapport X/T compris entre 5 et 50 et un rapport N/X compris entre 0,010 et 0,065.

La structure de la zéolithe EUO selon l'invention est identifiée par diffractométrie des rayons X. Sa cristallinité est calculée à partir du diagramme de diffraction par comparaison avec une zéolithe EUO de référence. La cristallinité correspond au rapport de la surface des pics des solides analysés sur la surface des pics de la zéolithe EUO de référence, dans le domaine d'angle de diffraction $2\theta = 8$ à 40°. La zéolithe selon la présente invention présente un diagramme de diffraction conforme à celui des zéolithes de type structural EUO et elle présente une cristallinité supérieure à 80%, de préférence supérieure à 85% et de manière encore plus préférée supérieure à 90 %.

La composition chimique de la zéolithe EUO selon l'invention est déterminée par les techniques typiques d'analyses élémentaires. En particulier, les teneurs en éléments X et T, notamment en silicium et en aluminium, sont déterminées par fluorescence de rayons X. Le rapport X/T, en particulier le rapport Si/Al, de la zéolithe de type structural EUO de l'invention est compris entre 5 et 50, de préférence entre 6 et 35, de manière plus préférée entre 7 et 30, et de manière encore plus préférée ente 7 et 26.

La teneur en azote est déterminée par détection catharométrique après une combustion et une réduction. Le rapport N/X, en particulier le rapport N/Si, de la zéolithe de type structural EUO de l'invention est compris entre 0,010 et 0,065, de préférence entre 0,015 et 0,055 et de manière encore plus préférée entre 0,020 et 0,045.

Le cation organique jouant le rôle de structurant et présent dans la porosité intracristalline de la zéolithe est identifié par spectroscopie de résonance magnétique nucléaire du carbone 13 à l'angle magique sous polarisation croisée.

La zéolithe EUO selon l'invention est obtenue par exemple selon un mode de synthèse comprenant le mélange en milieu aqueux d'au moins une source d'au moins un élément X choisi parmi le silicium et le germanium, d'au moins une source d'au moins un élément T choisi parmi l'aluminium, le fer, le gallium, le bore, le titane, le vanadium, le zirconium, le molybdène, l'arsenic, l'antimoine, le chrome et le manganèse, d'au moins un composé organique azoté Q ou des précurseurs correspondants audit composé organique Q, et des germes d'au moins un matériau zéolithique S de même type structural que la zéolite EUO de l'invention. La réaction du mélange est maintenue jusqu'à cristallisation de la zéolithe. Tout composé organique azoté Q conduisant à une zéolithe brute de synthèse présentant un rapport N/X compris entre 0,010 et 0,065, de préférence entre 0,015 et 0,055 et de manière encore plus préférée entre 0,020 et 0,045 convient. Avantageusement le composé organique est le dérivé dibenzyldiméthylammonium ou ses précurseurs. Le spectre RMN$^{13}$C du composé organique présent dans la porosité intracrisatlline de la zéolithe de type structural EUO de l'invention correspond, dans ce cas, à celui du dérivé dibenzyldiméthylammonium.

Le structurant organique Q peut être un sel de dibenzyldiméthylammonium tel que par exemple l'halogénure, l'hydroxyde, le sulfate, le silicate ou l'aluminate.

Les sels de dibenzyldiméthylammonium peuvent aussi être obtenus à partir de précurseurs. Des précurseurs particulièrement appropriés sont la benzyldiméthylamine et l'halogénure de benzyle ou l'alcool benzylique. Ils peuvent être utilisés tels quels in situ ou peuvent être préchauffés ensemble dans le récipient de réaction de préférence en solution avant l'addition des autres réactifs nécessaires pour la synthèse de la zéolithe de type structural EUO.

Les matériaux zéolithiques jouant le rôle de germes sont au moins en partie, et préférentiellement en totalité, de même type structural que celui de la zéolithe EUO de l'invention. Avantageusement, les germes zéolithiques de type structural EUO présentent un rapport X/T compris entre 5 et 100, où X et T sont définis comme précédemment. De façon très préférée, la zéolithe de l'invention est préparée à l'aide de germes zéolithiques comprenant les mêmes éléments X et T.

De manière préférée, le rapport X/T desdits germes est compris entre 5 et 50. De manière plus préférée, il est compris entre 6 et 35 et de manière encore plus préférée, il est compris entre 7 et 30. Très préférentiellement, les germes ont la même composition cristalline que celle de la zéolithe EUO à préparer c'est-à-dire qu'ils présentent le même rapport Si/Al que celui de la zéolithe que l'on prépare.

Les matériaux zéolithiques jouant le rôle de germes peuvent être introduits lors de la synthèse de la zéolithe que l'on cherche à synthétiser sous plusieurs formes. Ainsi les germes peuvent être introduits après avoir subi au moins l'une des étapes choisie parmi les étapes suivantes : lavage, séchage, calcination et échange ionique. Les germes peuvent également être introduits sous la forme brute de synthèse.

Les matériaux zéolithiques jouant le rôle de germes peuvent être introduits à n'importe quel moment de la préparation de la zéolithe que l'on cherche à synthétiser. Les germes peuvent être introduits en même temps que les sources des éléments X et T, que le structurant organique Q, ou les germes peuvent être introduits en premier dans le mélange aqueux ou encore les germes peuvent être introduits après l'introduction des sources des éléments X et T et du structurant. De préférence, les germes sont introduits après homogénéisation au moins en partie du mélange aqueux contenant les sources des éléments X et T et le structurant.

La taille des particules de germes zéolithiques pouvant avoir une influence sur le processus de synthèse, il convient de choisir des germes présentant une taille de particules telle que les conditions de synthèse soient optimales. On entend par particule de germes zéolithiques, soit un cristal de zéolithe soit un agrégat de cristaux de zéolithe où un agrégat est un ensemble formé par au moins deux cristaux de zéolithe ayant au moins un point de contact entre eux. Ainsi, au moins la majeure partie (soit au moins 90 % en volume) des particules de germes introduites lors de la préparation de la zéolithe EUO ont une taille comprise entre 0,001 et 500 $\mu$m, de préférence entre 0,005 et 250 $\mu$m et de manière encore plus préférée entre 0,005 et 200 $\mu$m.

Dans une mise en oeuvre particulière, indépendante ou non de la mise en oeuvre précédente, il est avantageux d'ajouter au milieu réactionnel au moins un sel de métal alcalin P. On peut citer par exemple des radicaux acides forts tels que du bromure, du chlorure, de l'iodure, du sulfate, du phosphate ou du nitrate, ou des radicaux acides faibles tels que les radicaux acides organiques, par exemple du citrate ou de l'acétate. Ce sel peut accélérer la cristallisation de la zéolithe de type structural EUO à partir du mélange réactionnel.

Le mélange réactionnel utilisé dans la synthèse de la zéolithe de type structural EUO de l'invention a généralement la composition suivante, exprimée sous la forme d'oxyde :

| | |
|---|---|
| $XO_2/T_2O_3$ (mol/mol) | 10-100 |
| $OH^-/XO_2$ (mol/mol) | 0,002 à 2,0 |
| $Q/XO_2$ (mol/mol) | 0,002 à 2,0 |
| $Q/(M^+ + Q)$ (mol/mol) | 0,1 à 1,0 |
| $H_2O/XO_2$ (mol/mol) | 1 à 500 |
| $P/XO_2$ (mol/mol) | 0 à 5 |
| $S/XO_2$ (g/g) | 0,0001 à 0,1 |

de manière préférée, le mélange réactionnel a la composition suivante, exprimée sous la forme d'oxydes :

| | |
|---|---|
| $XO_2/T_2O_3$ (mol/mol) | 12-70 |
| $OH^-/XO_2$ (mol/mol) | 0,005 à 1,5 |
| $Q/XO_2$ (mol/mol) | 0,005 à 1,5 |
| $Q/(M^+ + Q)$ (mol/mol) | 0,1 à 1,0 |
| $H_2O/XO_2$ (mol/mol) | 3 à 250 |
| $P/XO_2$ (mol/mol) | 0 à 1 |
| $S/XO_2$ (g/g) | 0,0005 à 0,07 |

et, de manière encore plus préférée, le mélange réactionnel a la composition suivante, exprimée sous la forme d'oxydes :

| | |
|---|---|
| $XO_2/T_2O_3$ (mol/mol) | 15-60 |
| $OH^-/XO_2$ (mol/mol) | 0,01 à 1 |
| $Q/XO_2$ (mol/mol) | 0,01 à 1 |
| $Q/(M^+ + Q)$ (mol/mol) | 0,1 à 1,0 |
| $H_2O/XO_2$ (mol/mol) | 5 à 100 |
| $P/XO_2$ (mol/mol) | 0 à 0,25 |
| $S/XO_2$ (g/g) | 0,001 à 0,04 |

où
X est le silicium et/ou le germanium,
T est au moins un élément choisi parmi l'aluminium, le fer, le gallium, le bore, le titane, le vanadium, le zirconium, le molybdène, l'arsenic, l'antimoine, le chrome et le manganèse,
$M^+$ représente un métal alcalin,
Q représente le structurant organique ou les précurseurs dudit structurant,
S représente les germes de zéolithe présents sous la forme brute, séchée, calcinée ou échangée,
P représente le sel de métal alcalin.

M et/ou Q peuvent être présents sous forme d'hydroxydes ou de sels d'acides inorganiques ou organiques à la condition que le critère $OH^-/XO_2$ soit satisfait.

Le métal alcalin ($M^+$) préféré est le sodium. L'élément préféré X est le silicium. L'élément T préféré est l'aluminium.

La source de silicium peut être l'une quelconque de celles dont l'utilisation est habituellement envisagée pour la synthèse des zéolithes, par exemple la silice solide en poudre, l'acide silicique, la silice colloïdale ou la silice en solution. Parmi les silices en poudre utilisables, il convient de citer les silices précipitées, spécialement celles obtenues par précipitation à partir d'une solution d'un silicate de métal alcalin, comme les « Zeosil » ou les « Tixosil », produites par Rhodia, les silices pyrogénées telles que les «Aerosil » produites par Degussa et les «Cabosil» produites par Cabot et les gels de silice. Des silices colloïdales de diverses granulométries peuvent être utilisées, comme celles vendues sous les marques déposées «LUDOX» de Dupont, et «SYTON» de Monsanto. Les silices dissoutes utilisables sont notamment les verres solubles ou silicates commercialisés contenant : 0,5 à 6,0 et spécialement 2,0 à 4,0 moles de $SiO_2$ par mole d'oxyde de métal alcalin et les silicates obtenus par dissolution de silice dans un hydroxyde de métal alcalin, un hydroxyde d'ammonium quaternaire ou un mélange de ceux-ci.

La source d'aluminium est le plus avantageusement l'aluminate de sodium, mais peut aussi être l'aluminium, un sel d'aluminium, par exemple le chlorure, le nitrate ou le sulfate, un alcoolate d'aluminium ou l'alumine elle-même qui de préférence se trouve sous une forme hydratée ou hydratable comme l'alumine colloïdale, la pseudoboehmite, la boehmite, l'alumine gamma, ou les trihydrates.

On peut utiliser des mélanges des sources citées ci-dessus. Des sources combinées de silicium et d'aluminium peuvent aussi être mises en oeuvre, telles que les silice-alumines amorphes ou certaines argiles.

Le mélange de réaction est habituellement mis à réagir sous la pression autogène, éventuellement avec apport d'un gaz, par exemple d'azote, à une température comprise entre 85 et 250°C jusqu'à ce qu'il se forme des cristaux de la zéolithe, ce qui peut durer de 1 minute à plusieurs mois suivant la composition des réactifs, le mode de chauffage et de mélange, la température de travail et l'agitation. L'agitation est facultative, mais préférable, parce qu'elle abrège la durée de réaction.

Au terme de la réaction, la phase solide est collectée sur un filtre et lavée. A ce stade là, la zéolithe EUO selon l'invention est dite brute de synthèse et contient dans sa porosité intracristalline le structurant organique azoté, de préférence le cation DBDMA. Elle est alors prête pour les opérations suivantes comme le séchage, la calcination et l'échange d'ions. La zéolithe de l'invention, après avoir été soumise à une calcination, est débarrassée du structurant organique azoté mais son rapport X/T reste inchangé. Il va de soi que, sous forme calcinée, la zéolithe de l'invention ne contient plus d'azote.

Ainsi, afin d'obtenir la forme hydrogène de la zéolithe de type structural EUO, on peut effectuer un échange d'ions avec un acide, spécialement un acide minéral fort comme l'acide chlorhydrique, sulfurique ou nitrique, ou avec un composé tel que le chlorure, le sulfate ou le nitrate d'ammonium. L'échange d'ions peut être effectué par dilution en une ou plusieurs fois avec la solution d'échange d'ions. La zéolithe peut être calcinée avant ou après l'échange d'ions, ou entre deux étapes d'échange d'ions, de préférence avant l'échange d'ions afin d'éliminer toute substance organique incluse, dans la mesure où l'échange d'ions s'en trouve facilité.

En règle générale, le ou les cations de la zéolithe de type structural EUO, peuvent être remplacés par un ou des cations quelconques de métaux et en particulier ceux des groupes IA, IB, IIA, IIB, IIIA, IIIB (y compris les terres rares), VIII (y compris les métaux nobles) de même que par le plomb, l'étain et le bismuth (tableau périodique dans "Handbook of Physics and Chemistry", 76ème édition). L'échange est réalisé au moyen de sels hydrosolubles quelconques contenant le cation approprié.

La présente invention concerne également l'utilisation de la zéolithe de la présente invention comme solide acide pour la catalyse dans les domaines du raffinage et de la pétrochimie. Par solide acide, on entend que la zéolithe est sous sous forme hydrogène, c'est-à-dire que la zéolithe brute de synthèse a été calcinée et échangée.

La zéolithe de l'invention peut également être utilisée comme adsorbant pour le contrôle de la pollution et comme tamis moléculaire pour la séparation. Avantageusement, elle est utilisée comme germes pour la synthèse de zéolithes de_tout type structural. Lorsqu'elle utilisée comme germes, elle peut aussi bien se trouver sous sa forme brute de synthèse que sous sa forme calcinée ou que sous sa forme échangée.

Par exemple, lorsque la zéolithe EUO de l'invention est utilisée comme catalyseur, elle est sous forme calcinée c'est-à-dire débarrassée du structurant azoté et peut être associée à une matrice inorganique qui peut être inerte ou catalytiquement active et à une phase métallique. La matrice inorganique peut être présente simplement comme liant pour maintenir ensemble les petites particules de la zéolithe sous les différentes formes connues des catalyseurs (extrudés, pastilles, billes, poudres), ou bien peut être ajoutée comme diluant pour imposer le degré de conversion dans un procédé qui progresserait sinon à une allure trop rapide conduisant à un encrassement du catalyseur en conséquence d'une formation exagérée de coke. Des matrices inorganiques typiques sont notamment des matières de support pour les catalyseurs comme la silice, les différentes formes d'alumine, la magnésie, la zircone, les oxydes de titane, de bore, les phosphates d'aluminium, de titane, de zirconium, les argiles kaoliniques, les bentonites, les montmorillonites, la sépiolite, l'attapulgite, la terre à foulon, les matières poreuses synthétiques comme $SiO_2$-$Al_2O_3$, $SiO_2$-$ZrO_2$, $SiO_2$-$ThO_2$, $SiO_2$-$BeO$, $SiO_2$-$TiO_2$ ou toute combinaison de ces composés.

La zéolithe de type structural EUO de l'invention peut aussi être associée à au moins une autre zéolithe et jouer le rôle de phase active principale ou d'additif.

La matrice inorganique peut être un mélange de différents composés, en particulier d'une phase inerte et d'une phase active.

La phase métallique est introduite sur la zéolithe seule, la matrice inorganique seule ou l'ensemble matrice inorganique-zéolithe par échange d'ions ou imprégnation avec des cations ou oxydes choisis parmi les cations ou oxydes des éléments suivants, Cu, Ag, Ga, Mg, Ca, Sr, Zn, Cd, B, Al, Sn, Pb, V, P, Sb, Cr, Mo, W, Mn, Re, Fe, Co, Ni, Pt, Pd, Ru, Rh, Os, Ir et tout autre élément de la classification périodique des éléments.

Les compositions catalytiques comportant la zéolithe de type structural EUO de l'invention, sous sa forme calcinée, trouvent avantageusement leur application dans les réactions d'isomérisation, de transalkylation et de dismutation, d'alkylation et de désalkylation, d'hydratation et de déshydratation, d'oligomérisation et de polymérisation, de cyclisation, d'aromatisation, de craquage et d'hydrocraquage, de reformage, d'hydrogénation et de déshydrogénation, d'oxydation, d'halogénation, de synthèses d'amines, d'hydrodésulfuration et d'hydrodénitrification, d'élimination catalytique des oxydes d'azote, lesdites réactions comprenant des hydrocarbures aliphatiques saturés et insaturés, des hydrocarbures aromatiques, des composés organiques oxygénés et des composés organiques contenant de l'azote et/ou du soufre, ainsi que des composés organiques contenant d'autres groupes fonctionnels.

Lorsque ladite zéolithe EUO est utilisée comme solide acide dans des réactions catalytiques, la catalyseur contient :

- au moins une zéolithe de type structural EUO de l'invention, sous sa forme_calcinée, présentant un rapport X/T compris entre 5 et 50, de préférence compris entre 6 et 35, de manière plus préférée compris entre 7 et 30, et de manière encore plus préférée compris entre 7 et 26
- au moins un métal du groupe VIII, choisi de préférence dans le groupe constitué par le palladium et le platine et de manière encore plus préférée le platine,
- au moins un liant, de préférence l'alumine,
- éventuellement au moins un élément appartenant au groupe formé par les éléments des groupes IB, IIB, IIIA, IVA, VIB et VIIB, de préférence choisi dans le groupe formé par l'étain et l'indium,
- éventuellement du soufre,

De manière plus précise, le catalyseur comprend généralement par rapport au poids de catalyseur :

- de 1 à 90 % bornes incluses, de préférence de 3 à 75 % bornes incluses et de manière encore plus préférée de 4 à 60 % bornes incluses en poids, d'au moins une zéolithe de type structural EUO de la présente invention, sous sa forme_calcinée, comprenant au moins un élément X choisi parmi le germanium et le silicium et au moins un élément T choisi dans le groupe formé par l'aluminium, le fer, le gallium, le bore, le titane, le vanadium, le zirconium, le molybdène, l'arsenic, l'antimoine, le chrome et le manganèse, de préférence l'aluminium et le bore, dont le rapport atomique X/T est compris entre 5 et 50, de préférence entre 6 et 35, de manière plus préférée entre 7 et 30 et de manière encore plus préférée entre 7 et 26, ladite zéolithe se présentant au moins en partie sous forme acide c'est-à-dire sous forme hydrogène H,
- de 0,01 à 10% bornes incluses, de préférence de 0,01 à 2 % bornes incluses et de manière encore plus préférée de 0,05 à 1,0 % bornes incluses en poids, d'au moins un métal du groupe VIII de la classification périodique des éléments, de préférence choisi dans le groupe formé par le platine et le palladium et de manière encore plus préférée le platine,
- éventuellement de 0,01 à 10 % bornes incluses, de préférence de 0,01 à 2% bornes incluses et de manière encore plus préférée entre 0,05 et 1,0 % bornes incluses en poids, d'au moins un élément du groupe formé par les groupes IB, IIB, IIIA, IVA, VIB et VIIB de la classification périodique des éléments, de préférence choisi dans le groupe formé par l'étain et l'indium,
- éventuellement du soufre dont la teneur est telle que le rapport du nombre d'atomes de soufre sur le nombre d'atomes de métal du groupe VIII déposés est compris entre 0,5 et 2 bornes incluses,
- le complément à 100 % en poids d'au moins un liant, de préférence de l'alumine.

Toute méthode de mise en forme convient pour le présent catalyseur. On pourra utiliser, par exemple, le pastillage, l'extrusion ou la mise sous forme de billes. La mise en forme du catalyseur selon l'invention est généralement telle que le catalyseur est de préférence sous forme d'extrudés ou de billes en vue de son utilisation.

La zéolithe de type structural EUO de la présente invention est traitée par au moins une étape de calcination, puis soumise à au moins un échange ionique dans au moins une solution de $NH_4NO_3$ de manière à obtenir une zéolithe dont la teneur en élément alcalin résiduel A, par exemple le sodium, est plus ou moins importante.

La zéolithe de type structural EUO de la présente invention, sous sa forme calcinée, comprise dans le catalyseur selon l'invention, est au moins en partie, de préférence pratiquement totalement, sous forme acide, c'est-à-dire sous forme hydrogène ($H^+$), la teneur en élément alcalin, par exemple le sodium, étant de préférence telle que le rapport atomique A/T est inférieur à 0,5, de préférence inférieur à 0,1, de manière encore plus préférée inférieur à 0,02.

Le liant (ou matrice) compris dans le catalyseur utilisé dans la présente invention consiste généralement en au moins un élément choisi dans le groupe formé par les argiles, la magnésie, les alumines, les silices, l'oxyde de titane, l'oxyde de bore, la zircone, les phosphates d'aluminium, les phosphates de titane, les phosphates de zirconium et les silices alumines. De préférence, le liant est une alumine.

Les métaux peuvent être introduits soit tous de la même façon soit par des techniques différentes, à tout moment de la préparation, avant ou après mise en forme et dans n'importe quel ordre. De plus, des traitements intermédiaires tels que par exemple une calcination et/ou une réduction peuvent être appliqués entre les dépôts des différents métaux.

La préparation du catalyseur pourra être effectuée par toute méthode connue de l'homme du métier. Au moins un élément du groupe VIII est introduit dans la zéolithe ou sur le liant, de préférence sur le liant avant ou après mise en forme.

Une méthode préférée consiste à réaliser un mélange de la matrice et de la zéolithe suivie d'une mise en forme. La mise en forme est généralement suivie d'une calcination, généralement à une température comprise entre 250°C et 600°C bornes incluses. Au moins un élément du groupe VIII de la classification périodique des éléments est introduit après cette calcination, de préférence par dépôt sélectif sur le liant. Lesdits éléments sont déposés pratiquement à plus de 90 % bornes incluses totalement sur le liant de la manière connue de l'homme du métier par contrôle des paramètres utilisés lors dudit dépôt, comme par exemple la nature du précurseur utilisé pour effectuer ledit dépôt.

Au moins un élément du groupe VIII est déposé de manière préférée sur le mélange zéolithe EUO-liant préalablement mis en forme par tout procédé connu de l'homme du métier. Un tel dépôt est par exemple effectué par la technique d'imprégnation à sec, d'imprégnation par excès ou d'échange ionique. Tous les précurseurs conviennent pour le dépôt de ces éléments. De préférence, on mettra en oeuvre un échange anionique avec de l'acide hexachloroplatinique et/ou de l'acide hexachloropalladique en présence d'un agent compétiteur, par exemple l'acide chlorhydrique. Dans ce cas, le métal est pratiquement à plus de 90 % déposé totalement sur le liant et il présente une bonne dispersion et une bonne répartition macroscopique à travers le grain de catalyseur ce qui constitue une méthode préférée de préparation.

Une autre méthode préférée de préparation du catalyseur, utilisée dans la présente invention consiste à malaxer la zéolithe EUO, sous sa forme calcinée, dans un gel humide de matrice (obtenu généralement par mélange d'au moins un acide et d'une poudre de matrice), par exemple l'alumine, pendant une durée nécessaire à l'obtention d'une bonne homogénéité de la pâte ainsi obtenue, soit par exemple pendant une dizaine de minutes, puis à passer la pâte à travers une filière pour former des extrudés. Puis après séchage, par exemple pendant quelques heures à environ 120°C en étuve et après calcination, par exemple pendant deux heures à environ 500°C, au moins un élément, par exemple le platine, est déposé, par exemple par échange anionique avec de l'acide hexachloroplatinique en présence d'un agent compétiteur (par exemple l'acide chlorhydrique), ledit dépôt étant suivi d'une calcination par exemple pendant environ 2 heures à environ 500°C.

Eventuellement, au moins un autre élément choisi dans le groupe formé par les éléments des groupes IB, IIB, IIIA, IVA, VIB et VIIB est ajouté. On peut ajouter les éléments du groupe VIII et des groupes IB, IIB, IIIA, IVA, VIB et VIIB soit séparément à n'importe quelle étape de la préparation dudit catalyseur soit simultanément dans au moins une étape unitaire. Lorsqu'au moins un élément des groupes IB, IIB, IIIA, IVA, VIB et VIIB est ajouté séparément, il est préférable qu'il soit ajouté préalablement à l'élément du groupe VIII. Toutes les techniques de dépôt connues de l'homme du métier et tous les précurseurs conviennent.

Le platine est généralement introduit dans la matrice sous forme d'acide hexachloroplatinique, mais pour tout métal noble peuvent être également utilisés des composés ammoniaqués avec, dans ce cas, dépôt du métal noble dans la zéolithe, ou peuvent être utilisés des composés tels que, par exemple, le chloroplatinate d'ammonium, le dichlorure de platine dicarbonyle, l'acide hexahydroxyplatinique, le chlorure de palladium, le nitrate de palladium.

Dans le cas du platine, on peut également citer par exemple les sels de platine II tétramines de formule $Pt(NH_3)_4X_2$ ; les sels de platine IV hexamines de formule $Pt(NH_3)_6X_4$ ; les sels de platine IV halogénopentamines de formule $(PtX(NH_3)_5)X_3$ ; les sels de platine IV tétrahalogénodiamines de formule $PtX_4(NH_3)_2$ ; les complexes de platine avec les halogènes-polycétones et les composés halogénés de formule $H(Pt(acac)_2X)$ ; X étant un halogène choisi dans le groupe formé par le chlore, le fluor, le brome et l'iode, et de préférence X étant le chlore, et acac représentant le groupe $C_5H_7O_2$ dérivé de l'acétylacétone.

L'introduction du métal noble de la famille du platine est de préférence effectuée par imprégnation à l'aide d'une solution aqueuse ou organique de l'un des composés organométalliques cités ci-dessus. Parmi les solvants organiques utilisables, on peut citer les hydrocarbures paraffiniques, naphténiques ou aromatiques contenant de 4 à 12 atomes de carbone, et les composés organiques halogénés ayant par exemple de 1 à 12 atomes de carbone par molécule. On peut citer par exemple le n-heptane, le méthylcyclohexane, le toluène et le chloroforme. On peut aussi utiliser les mélanges de solvants.

L'élément additionnel, éventuellement introduit, choisi dans le groupe formé par les éléments des groupes IB, IIB, IIIA, IVA, VIB et VIIB, peut être introduit par l'intermédiaire de composés tels que par exemple les chlorures, les bromures et les nitrates, les alkyles d'éléments des groupes IB, IIB, IIIA, IVA, VIB et VIIB, soit par exemple dans le cas de l'étain et de l'indium, les alkylétain, le nitrate et le chlorure d'indium.

Cet élément peut également être introduit sous la forme d'au moins un composé organique choisi dans le groupe constitué par les complexes dudit élément, en particulier les complexes polycétoniques du métal et les hydrocarbylmétaux tels que les alkyles, les cycloalkyles, les aryles, les alkylaryles métaux. Dans ce dernier cas, l'introduction du métal est avantageusement effectuée à l'aide d'une solution du composé organométallique dudit métal dans un solvant organique. On peut également employer des composés organohalogénés du métal. Comme composés du métal, on peut citer en particulier le tétrabutylétain dans le cas de l'étain, et le triphénylindium dans le cas de l'indium.

Le solvant d'imprégnation est choisi dans le groupe constitué par les hydrocarbures paraffiniques, naphténiques ou aromatiques contenant de 4 à 12 atomes de carbone par molécule et les composés organiques halogénés contenant de 1 à 12 atomes de carbone par molécule. On peut citer par exemple le n-heptane, le méthylcyclohexane et le chloroforme On peut aussi utiliser des mélanges des solvants définis ci-dessus.

Le métal additionnel peut être éventuellement introduit à tout moment de la préparation, de préférence préalablement au dépôt d'un ou plusieurs métaux du groupe VIII. Si ce métal est introduit avant le métal noble, le composé du métal utilisé est généralement choisi dans le groupe constitué par l'halogénure, le nitrate, l'acétate, le tartrate, le carbonate et l'oxalate du métal. L'introduction est alors avantageusement effectuée en solution aqueuse. Mais il peut également être introduit à l'aide d'une solution d'un composé organométallique du métal par exemple le tétrabutylétain. Dans ce cas, avant de procéder à l'introduction d'au moins un métal noble, on procède à une calcination sous air.

La préparation du catalyseur comprend généralement une calcination, habituellement à une température comprise entre environ 250°C et 600°C bornes incluses, pour une durée d'environ 0,5 à 10 heures, de préférence précédée d'un séchage, par exemple à l'étuve, à une température comprise entre la température ambiante et 250°C, de préférence entre 40 et 200°C. Ladite étape de séchage est de préférence menée pendant la montée en température nécessaire pour effectuer ladite calcination.

Dans le cas où le catalyseur de la présente invention contient du soufre, le soufre est introduit sur le catalyseur mis en forme, calciné, contenant le ou les métaux cités précédemment, soit *in-situ* avant la réaction catalytique, soit *ex-situ.* La sulfuration éventuelle intervient après la réduction. Dans le cas d'une sulfuration *in situ,* la réduction, si le catalyseur n'a pas été préalablement réduit, intervient avant la sulfuration. Dans le cas d'une sulfuration *ex-situ,* on effectue la réduction puis la sulfuration. La sulfuration s'effectue en présence d'hydrogène en utilisant tout agent sulfurant bien connu de l'homme de métier, tel que par exemple le sulfure de diméthyle ou le sulfure d'hydrogène. Par exemple, le catalyseur est traité avec une charge contenant du sulfure de diméthyle en présence d'hydrogène, avec une concentration telle que le rapport atomique soufre/métal soit de 1,5. Le catalyseur est ensuite maintenu pendant environ 3 heures à environ 400°C sous débit d'hydrogène avant l'injection de la charge.

Le catalyseur à base de la zéolithe EUO de l'invention est très avantageusement mis en oeuvre dans les réactions d'isomérisation d'une coupe C8 aromatique, comprenant par exemple soit un mélange de xylène(s), soit de l'éthylbenzène, soit un mélange de xylène(s) et d'éthylbenzène. Ledit procédé est mis en oeuvre généralement selon les conditions opératoires suivantes :

- une température comprise entre 300°C et 500°C bornes incluses, de préférence entre 320°C et 450°C bornes incluses et de manière encore plus préférée entre 340°C et 430°C bornes incluses,
- une pression partielle d'hydrogène comprise entre 0,3 et 1,5 MPa bornes incluses, de préférence entre 0,4 et 1,2 MPa bornes incluses et de manière encore préférée entre 0,6 et 1,2 MPa bornes incluses,
- une pression totale comprise entre 0,45 et 1,9 MPa bornes incluses, de préférence entre 0,6 et 1,5 MPa bornes incluses,
- une vitesse spatiale d'alimentation, exprimée en kilogramme de charge introduite par kilogramme de catalyseur et par heure, comprise entre 0,25 et 30 $h^{-1}$ bornes incluses, de préférence entre 1 et 25 $h^{-1}$ bornes incluses, et de manière encore plus préférée entre 2 et 15 $h^{-1}$ bornes incluses.

L'invention est illustrée par les exemples suivants.

**EXEMPLE 1 (comparatif)** : Synthèse d'une zéolithe EUO de rapport Si/Al égal à 56 et de rapport N/Si égal à 0,028, selon l'art antérieur.

Les conditions de synthèse sont définies dans le tableau 1.

On prépare la solution A composée de silicium et des précurseurs de structurant en diluant 3,530 g de benzyldiméthylamine (Lancaster, 98 %) et 3,260 g de chlorure de benzyle (Fluka, 99 %) dans 42,92 g d'eau puis en ajoutant 38,45 g de sol de silice colloïdal (Ludox HS40, Dupont, 40 % $SiO_2$). On dissout ensuite 0,610 g d'hydroxyde de sodium solide (Prolabo, 99 %) et 0,496 g d'aluminate de sodium solide (Prolabo, 46 % $Al_2O_3$, 33 % $Na_2O$) dans 5,36 g d'eau pour former la solution B. On ajoute la solution B dans la solution A sous agitation puis 5,36 g d'eau. On mélange jusqu'à homogénéisation. On fait réagir le mélange résultant dans un autoclave de 125 ml sous agitation pendant 3 jours à 180°C sous pression autogène. Après refroidissement, on filtre le produit et on le lave avec 100 ml d'eau déminéralisée puis on le sèche en étuve ventilée à 120°C.

**Tableau 1 : conditions de synthèse**

| formulation du gel | |
|---|---|
| $SiO_2$ (mol) | 60 |
| $Al_2O_3$ (mol) | 0,52 |
| $Na_2O$ (mol) | 3 |

(suite)

| formulation du gel | |
|---|---|
| BDMA (mol) | 6 |
| BCl (mol) | 6 |
| H2O (mol) | 1000 |
| Conditions de cristallisation | |
| Température (°C) | 180 |
| durée (jour) | 3 |
| BDMA = benzyldiméthylamine BCl = chlorure de benzyle | |

Les résultats de diffraction des rayons X, d'analyse chimique et de spectroscopie par résonance magnétique nucléaire du carbone 13 à l'angle magique sous polarisation croisée sont reportés dans le tableau 2. Le solide obtenu est une zéolithe EUO pure, de cristallinité de référence, de rapport Si/Al de 56, de rapport N/Si de 0,028 et contenant le cation DBDMA dans sa porosité intracristalline.

**Tableau 2 : caractéristiques du solide obtenu**

| diffraction des rayons X | |
|---|---|
| Identification de phase | EUO |
| Cristallinité (%) | 100 (référence) |
| analyses chimiques | |
| SiO2 (% poids) | 84,8 |
| Al2O3 (% poids) | 1,29 |
| Na2O (% poids) | 0,17 |
| N (% poids) | 0,56 |
| PAF (% poids) | 13,5 |
| Si/Al (mol/mol) | 56 |
| N/Si (mol/mol) | 0,028 |
| Spectroscopie de résonance magnétique nucléaire du carbone 13 à l'angle magique sous polarisation croisée | |
| Identification du composé organique inclus dans la zéolithe | DBDMA |
| $\delta$-CH3 (ppm) | 47,5 |
| $\delta$-CH2 (ppm) | 72,9 |
| $\delta$Caromatiques (ppm) | 130 (massif) |
| PAF = perte au feu $\delta$= déplacement chimique des différentes espèces du composé organique | |

Cette zéolithe EUO brute de synthèse, contenant le DBDMA, avec un rapport N/Si de 0,028 et un rapport Si/Al supérieur à 50 correspond à la zéolithe ZSM-50 de l'art antérieur. Elle représente la référence pour les analyses et les évaluations catalytiques.

**EXEMPLE 2 (comparatif) :** Zéolithe EUO de rapport Si/Al égal à 25, de rapport N/Si égal à 0,08 synthétisée avec le cation hexaméthylammonium comme structurant organique, selon l'art antérieur.

La zéolithe EUO présentant les rapports Si/Al et N/Si tels que définis ci-dessus est synthétisée avec le bromure d'hexaméthonium (HM, 1,6 triméthylammonium-hexane) selon les conditions décrites par J.L. Casci *et al* dans l'exemple 3 du brevet EP-A- 0 042 226.

Les résultats de diffraction des rayons X et d'analyse chimique sont reportés dans le tableau 3. Le solide obtenu est une zéolithe EUO pure, de cristallinité de 95 %, de rapport Si/Al de 25, de rapport N/Si de 0,074.

**Tableau 3 : caractéristiques du solide obtenu**

| Diffraction des rayons X | |
|---|---|
| Identification de phase | EUO |
| Cristallinité (%) | 95 |
| Analyses chimiques | |
| SiO2 (% poids) | 81,0 |
| Al2O3 (% poids) | 2,75 |
| Na2O (% poids) | 0,47 |
| N (% poids) | 1,40 |
| PAF (% poids) | 15,0 |
| Si/Al (mol/mol) | 25 |
| N/Si (mol/mol) | 0,074 |
| PAF = déplacement chimique | |

Cette zéolithe, de rapport Si/Al de 25, préparé avec HM selon l'art antérieur, et présentant un rapport N/Si supérieur à 0,065 correspond à la zéolithe EU-1. Elle sert de germes pour la synthèse de la zéolithe EUO selon l'invention

**EXEMPLE 3 (invention) :** Synthèse d'une zéolithe EUO de rapport Si/Al égal à 26 et de rapport N/Si égal à 0,031

Les conditions de synthèse sont définies dans le tableau 4.

On prépare la solution A composée de silicium et des précurseurs de structurant en diluant 3,530 g de benzyldiméthylamine (Lancaster, 98 %) et 3,260 g de chlorure de benzyle (Lancaster, 99 %) dans 42,79 g d'eau puis en ajoutant 38,37 g de sol de silice colloïdal (Ludox HS40, Dupont, 40 % SiO2). On dissout ensuite 0,418 g d'hydroxyde de sodium solide (Prolabo, 99 %) et 0,945 g d'aluminate de sodium solide (Prolabo, 46 % Al2O3, 33 % Na2O) dans 5,35 g d'eau pour former la solution B. On ajoute la solution B dans la solution A sous agitation puis 5,35 g d'eau. On mélange jusqu'à homogénéisation. On ajoute finalement 0,616 g de germes de zéolithe EUO, post synthèse, contenant le sodium et le cation hexaméthonium, préparée selon les conditions de l'exemple 2. On fait réagir le mélange résultant dans un autoclave de 125 ml sous agitation pendant 9 jours à 180°C sous pression autogène. Après refroidissement, on filtre le produit et on le lave avec 100 ml d'eau déminéralisée puis on le sèche en étuve ventilée à 120°C.

**Tableau 4 : conditions de synthèse**

| formulation du gel | |
|---|---|
| SiO2 (mol) | 60 |
| Al2O3 (mol) | 1 |
| Na2O (mol) | 3 |
| BDMA (mol) | 6 |
| BCl (mol) | 6 |
| H2O (mol) | 1000 |
| EUO/SiO2 (g/g) | 0,04 |
| conditions de cristallisation | |
| Température (°C) | 180 |

(suite)

| conditions de cristallisation | |
|---|---|
| Durée (jour) | 9 |
| BDMA = benzyldiméthylamine BCl = chlorure de benzyle | |

Les résultats de diffraction des rayons X, d'analyse chimique et de spectroscopie par résonance magnétique nucléaire du carbone 13 à l'angle magique sous polarisation croisée sont reportés dans le tableau 5. Le solide obtenu est une zéolithe EUO pure, de cristallinité de 95 % par rapport à la référence, de rapport Si/Al de 26, de rapport N/Si de 0,031 et contient le cation DBDMA dans sa porosité intracristalline.

**Tableau 5 : caractéristiques du solide obtenu**

| Diffraction des rayons X | |
|---|---|
| Identification de phase | EUO |
| Cristallinité (%) | 95 |
| Analyses chimiques (teneurs en poids) | |
| SiO2 (% poids) | 82,2 |
| Al2O3 (% poids) | 2,69 |
| Na2O (% poids) | 0,54 |
| N (% poids) | 0,59 |
| PAF (% poids) | 14,3 |
| Si/Al (mol/mol) | 26 |
| N/Si (mol/mol | 0,031 |
| Spectroscopie de résonance magnétique nucléaire du carbone 13 à l'angle magique sous polarisation croisée (déplacements chimiques) | |
| Identification du composé organique inclus dans la zéolithe | DBDMA |
| $\delta$-CH3 (ppm) | 48,0 |
| $\delta$-CH2 (ppm) | 74,1 |
| $\delta$Caromlatiques (ppm) | 130 (massif) |
| PAF = perte au feu $\delta$ = déplacement chimique des différentes espèces du composé organique | |

**Exemple 4 (comparatif) :** Préparation du catalyseur A non conforme à l'invention.

La matière première utilisée est la zéolithe EUO brute de synthèse de l'exemple 1, comprenant du DBDMA, de rapport atomique Si/Al global égal à 56 et de rapport N/Si égal à 0,028 et de teneur pondérale en Na2O par rapport au poids en zéolithe EU-1 sèche de 0,17%.

Cette zéolithe EUO subit tout d'abord une calcination dite sèche à 550°C sous flux d'air durant 6 heures. Puis le solide obtenu est soumis à trois échanges ioniques dans une solution de $NH_4NO_3$ 10N, à environ 100°C pendant 4 heures pour chaque échange.

A l'issue de ces traitements, la zéolithe EUO sous forme $NH_4$ a un rapport Si/Al atomique global égal à 56, une teneur pondérale en sodium par rapport au poids de zéolithe EUO sèche de 55 ppm. La zéolithe est à nouveau séchée puis calcinée pour obtenir la forme H.

Le catalyseur A est obtenu par mélange de la zéolithe EUO et d'une alumine sur laquelle 0,33 % poids de platine a été préalablement déposé, les deux composants étant sous forme d'une poudre de granulométrie comprise entre 125 et 315 $\mu$m.

Le platine est déposé sur cette alumine extrudée par échange anionique avec de l'acide hexachloroplatinique en présence d'un agent compétiteur (acide chlorhydrique). L'alumine humide est ensuite séchée à 120°C pendant 12 heures et calcinée sous débit d'air sec à la température de 500°C pendant une heure. La phase métallique présente une dispersion de 99 % mesurée par chimisorption d'oxygène. L'alumine est ensuite broyée.

Le catalyseur A est composé en teneurs pondérales de 60 % de zéolithe EUO forme hydrogène, ayant un rapport Si/Al de 56, de 39.87 % d'alumine et de 0,13 % de platine.

**Exemple 5 (conforme à l'invention) :** Préparation du catalyseur B conforme à l'invention.

La matière première utilisée est la zéolithe EUO brute de synthèse de l'exemple 3, comprenant du DBDMA, de rapport atomique Si/Al global égal à 26, de rapport N/Si égal à 0,031 et de teneur pondérale en $Na_2O$ par rapport au poids en zéolithe EU-1 sèche de 0,54%.

Cette zéolithe EUO subit tout d'abord une calcination dite sèche à 550°C sous flux d'air durant 6 heures. Puis le solide obtenu est soumis à trois échanges ioniques dans une solution de $NH_4NO_3$ 10N, à environ 100°C pendant 4 heures pour chaque échange.

A l'issue de ces traitements, la zéolithe EUO sous forme $NH_4$ a un rapport Si/Al atomique global égal à 26, une teneur pondérale en sodium par rapport au poids de zéolithe EUO sèche de 60 ppm. La zéolithe est à nouveau séchée puis calcinée pour obtenir la forme H. Le catalyseur B est obtenu par mélange de la zéolithe EUO et d'une alumine sur laquelle 0,33 % poids de platine (la même que celle utilisée dans l'exemple précédent) a été préalablement déposé, les deux composants étant sous forme d'une poudre de granulométrie comprise entre 125 et 315 $\mu m$.

Le catalyseur B est composé en teneurs pondérales de 10 % de zéolithe EUO forme hydrogène ayant un rapport Si/Al de 26, de 89,7 % d'alumine et de 0,3 % de platine.

**Exemple 6 :** Evaluation des propriétés catalytiques des catalyseurs A et B en isomérisation d'une coupe C8 aromatique.

Les performances des catalyseurs A et B ont été évaluées dans l'isomérisation d'une coupe C8 aromatique contenant principalement du méta-xylène, de l'ortho-xylène et de l'éthylbenzène sur 5 g de catalyseur en poudre. Les conditions opératoires sont les suivantes :

- température : 390°C,
- pression totale : 15 bar, (1 bar = 0,1 MPa)
- pression partielle d'hydrogène : 12 bar.

Les catalyseurs sont préalablement traités avec une charge contenant du disulfure de diméthyle (DMDS) en présence d'hydrogène, avec une concentration telle que le rapport atomique soufre/métal soit de 1,5. Le catalyseur est ensuite maintenu pendant 3 heures à 400°C sous débit d'hydrogène puis la charge est injectée.

Les catalyseurs ont été comparés en terme d'activité (par les approches à l'équilibre du para-xylène et par les conversions de l'éthylbenzène), et en terme de sélectivité par les pertes nettes à iso-approche à l'équilibre du para-xylène.

Pour le calcul des approches à l'équilibre (AEQ), les concentrations en para-xylène (%pX) sont exprimées par rapport aux trois isomères xylènes.

Les approches à l'équilibre (AEQ) sont définies de la manière suivante :

$$pX\ AEQ\ (\%) = 100\ x\ (\%pX_{effluent} - \%pX_{charge})\ /\ (\%pX_{equilibre} - \%pX_{charge})$$

Les pertes par craquage (P1) sont des pertes en AC8 sous forme de paraffines (PAR) de C1 à C8 :

$$P1(\%poids) = 100\ X\ [(\%PAR_{effluent}xpoids\ d'effluent) - (\%PAR_{charge}xpoids\ de\ charge)]\ /$$

$$(\%AC8_{charge}xpoids\ de\ charge)$$

Les pertes par dismutation/transalkylation (P2) sont des pertes en AC8 sous forme de naphtènes autres que N8, de toluène, de benzène et de C9+ aromatiques (OAN) :

$$P2(\%poids) = 100 \times [(\%OAN_{effluent} \times poids\ d'effluent) - (\%OAN_{charge} \times poids\ de\ charge)] / (\%AC8_{charge} \times poids\ de\ charge)$$

La somme des pertes P1 et P2 représente les pertes nettes.

L'évaluation des deux catalyseurs décrits conduisent aux résultats présentés dans le tableau 6.

**Tableau 6**

| Catalyseur | A (non conforme) | B (conforme) |
|---|---|---|
| pX AEQ (%) | 90,7 | 90,5 |
| conversion EB (%) | 39,3 | 40,1 |
| pertes nettes (% poids) | 4,55 | 3,36 |

On constate d'après les résultats du tableau 6 que le catalyseur B conforme à l'invention est beaucoup plus actif que le catalyseur A non conforme, puisqu'il conduit à iso-conditions opératoires à une pX AEQ égale à celle obtenue pour le catalyseur A mais pour une teneur en zéolithe nettement inférieure et avec une légère augmentation de pph. Le catalyseur B est également plus actif en conversion de l'éthylbenzène.

De plus, ces résultats montrent que la zéolithe EUO synthétisée selon le procédé de l'invention est plus sélective avec un gain de 26 % sur les pertes nettes dans la réaction d'isomérisation des aromatiques à 8 atomes de carbone.

**Revendications**

1. Zéolithe de type structural EUO comprenant au moins un élément X choisi parmi le silicium et le germanium et au moins un élément T choisi parmi l'aluminium, le fer, le gallium, le bore, le titane, le vanadium, le zirconium, le molybdène, l'arsenic, l'antimoine, le chrome et le manganèse **caractérisée en ce qu'**elle présente un rapport X/T compris entre 6 et 35 et un rapport N/X compris entre 0,010 et 0,065, N étant l'azote.

2. Zéolithe selon la revendication 1 **caractérisée en ce qu'**elle présente un rapport X/T compris entre 7 et 30.

3. Zéolithe selon la revendication 1 ou 2 **caractérisée en ce qu'**elle présente un rapport X/T compris entre 7 et 26.

4. Zéolithe selon l'une des revendications 1 à 3 **caractérisée en ce qu'**elle présente un rapport N/X compris entre 0,015 et 0,055.

5. Zéolithe selon l'une des revendications 1 à 4 **caractérisée en ce qu'**elle présente un rapport N/X compris entre 0,020 et 0,045.

6. Zéolithe selon l'une des revendications 1 à 5 **caractérisée en ce qu'**elle contient le cation dibenzyldiméthylammonium dans sa porosité intracristalline.

7. Zéolithe selon l'une des revendications 1 à 6 **caractérisée en ce que** l'élément X est le silicium et l'élément T est l'aluminium.

8. Zéolithe **caractérisée en ce qu'**elle est obtenue par calcination d'une zéolithe selon l'une des revendications 1 à 7.

9. Utilisation de la zéolithe de type structural EUO selon l'une des revendications 1 à 8 comme germes pour la synthèse de zéolithes de tout type structural.

10. Catalyseur comprenant une zéolithe de type structural EUO selon la revendication 8.

11. Catalyseur selon la revendication 10 **caractérisé en ce qu'**il comprend au moins un liant et au moins un métal du groupe VIII.

12. Catalyseur selon l'une des revendications 10 ou 11 **caractérisé en ce que** la zéolithe est au moins en partie sous forme acide.

13. Catalyseur selon l'une des revendications 10 à 12 **caractérisé en ce qu'**il comprend au moins un métal sélectionné dans le groupe constitué par les éléments des groupes IB, IIB, IIIA, IVA, VIB et VIIB.

14. Catalyseur selon l'une des revendications 10 à 13 **caractérisé en ce qu'**il comprend du soufre.

15. Procédé pour la transformation d'hydrocarbures comprenant la mise en contact d'une charge hydrocarbonée avec le catalyseur selon l'une des revendications 10 à 14.

16. Procédé selon la revendication 15 tel que le type de transformation d'hydrocarbures est l'isomérisation d'une coupe aromatique à 8 atomes de carbone.

**Claims**

1. EUO-structural-type zeolite that comprises at least one element X that is selected from among the silicon and germanium and at least one element T that is selected from among aluminum, iron, gallium, boron, titanium, vanadium, zirconium, molybdenum, arsenic, antimony, chromium and manganese, **characterized in that** it has an X/T ratio of between 6 and 35 and an N/X ratio of between 0.010 and 0.065, N being nitrogen.

2. Zeolite according to claim 1, wherein it has an X/T ratio of between 7 and 30.

3. Zeolite according to one of claims 1 or 2, wherein it has an X/T ratio of between 7 and 26.

4. Zeolite according to one of claims 1 to 3, wherein it has an N/X ratio of between 0.015 and 0.055.

5. Zeolite according to one of claims 1 to 4, wherein it has an N/X ratio of between 0.020 and 0.045.

6. Zeolite according to one of claims 1 to 5, wherein it contains the dibenzyldimethylammonium cation in its intracrystalline pores.

7. Zeolite according to one of claims 1 to 6, wherein element X is silicon and element T is aluminum.

8. Zeolite obtained by calcination of a zeolite according to claims 1 to 7.

9. Use of the EUO-structural-type zeolite according to one of claims 1 to 8 as nuclei for the synthesis of zeolites of any structural type.

10. Catalyst that comprises an EUO-structural-type zeolite according to claim 8.

11. Catalyst according to claim 10, wherein it comprises at least one binder and at least one metal from group VIII.

12. Catalyst according to claim 10 or claim 11, wherein the zeolite is at least partly in acid form.

13. Catalyst according to one of claims 10 to 12, wherein it comprises at least one metal belonging to the group that is formed by the elements of groups IB, IIB, IIIA, IVA, VIB and VIIB.

14. Catalyst according to one of claims 10 to 13, wherein it comprises sulfur.

15. Process for the conversion of hydrocarbons comprising bringing into contact an hydrocarbon feedstock with a catalyst according to one of claims 10 to 14.

16. Process according to claim 15 wherein the conversion of hydrocarbons consists in the isomerization of an aromatic feedstock with 8 carbon atoms.

**Patentansprüche**

1. Zeolith vom Strukturtyp EUO, umfassend mindestens ein Element X, ausgewählt aus Silicium und Germanium, und mindestens ein Element T, ausgewählt aus Aluminium, Eisen, Gallium, Bor, Titan, Vanadium, Zirkonium, Molybdän, Arsen, Antimon, Chrom und Mangan, **dadurch gekennzeichnet, dass** das X/T-Verhältnis im Bereich von 6 bis 35 liegt und das N/X-Verhältnis im Bereich von 0,010 bis 0,065 liegt, wobei N Stickstoff ist.

2. Zeolith nach Anspruch 1, **dadurch gekennzeichnet, dass** er ein X/T-Verhältnis im Bereich von 7 bis 30 aufweist.

3. Zeolith nach Anspruch 1 oder 2, **dadurch gekennzeichnet, dass** er ein X/T-Verhältnis im Bereich von 7 bis 26 aufweist.

4. Zeolith nach einem der Ansprüche 1 bis 3, **dadurch gekennzeichnet, dass** er ein N/X-Verhältnis im Bereich von 0,015 bis 0,055 aufweist.

5. Zeolith nach einem der Ansprüche 1 bis 4, **dadurch gekennzeichnet, dass** er ein N/X-Verhältnis im Bereich von 0,020 bis 0,045 aufweist.

6. Zeolith nach einem der Ansprüche 1 bis 5, **dadurch gekennzeichnet, dass** er in seinen intrakristallinen Poren das Dibenzyldimethylammonium-Kation enthält.

7. Zeolith nach einem der Ansprüche 1 bis 6, **dadurch gekennzeichnet, dass** das Element X Silicium ist und das Element T Aluminium ist.

8. Zeolith, **dadurch gekennzeichnet, dass** er durch Brennen eines Zeoliths gemäß einem der Ansprüche 1 bis 7 erhalten wird.

9. Verwendung des Zeoliths vom Strukturtyp EUO gemäß einem der Ansprüche 1 bis 8 als Keime für die Synthese von Zeolithen beliebiger Strukturtypen.

10. Katalysator, umfassend einen Zeolith vom Strukturtyp EUO nach Anspruch 8.

11. Katalysator nach Anspruch 10, **dadurch gekennzeichnet, dass** er mindestens ein Bindemittel und mindestens ein Metall der Gruppe VIII umfasst.

12. Katalysator nach einem der Ansprüche 10 oder 11, **dadurch gekennzeichnet, dass** der Zeolith mindestens teilweise in saurer Form vorliegt.

13. Katalysator nach einem der Ansprüche 10 bis 12, **dadurch gekennzeichnet, dass** er mindestens ein Metall umfasst, das aus der Gruppe ausgewählt ist, die aus den Elementen der Gruppen IB, IIB, IIIA, IVA, VIB und VIIB besteht.

14. Katalysator nach einem der Ansprüche 10 bis 13, **dadurch gekennzeichnet, dass** er Schwefel umfasst.

15. Verfahren zur Umwandlung von Kohlenwasserstoffen, umfassend das Inkontaktbringen einer kohlenwasserstoffhaltigen Charge mit dem Katalysator gemäß einem der Ansprüche 10 bis 14.

16. Verfahren nach Anspruch 15, derart, dass es sich der Art der Kohlenwasserstoffumwandlung um die Isomerisierung einer aromatischen Fraktion mit 8 Kohlenstoffatomen handelt.

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4723051 A
- US 4665258 A
- EP 0923987 A
- EP 0042226 A
- EP 0051318 A
- EP 0159845 A
- US 4640829 A


**Littérature non-brevet citée dans la description**

- **W.M. Meier ; D.H. Oison.** Atlas of Zeolites Structure Types. 1996
- *Zeolites,* 1988, vol. 8, 74
- **A. Moini et al.** *Zeolites,* 1994, 14
- **A. Thangaraj et al.** *Zeolites,* 1991, 11
- **W. Souverijns et al.** *Microporous Materials,* 1995, vol. 4, 123-130
- **Rao et al.** *Zeolites,* 1989, vol. 9, 483-490